Europäisches Patentamt

European Patent Office

Office européen des brevets

(11) Veröffentlichungsnummer: **0 137 406**
**A1**

(12) **EUROPÄISCHE PATENTANMELDUNG**

(21) Anmeldenummer: **84111461.4**

(22) Anmeldetag: **26.09.84**

(51) Int. Cl.⁴: **F 16 H 47/04**
**B 60 K 17/10**

(30) Priorität: **07.10.83 DE 3336590**

(43) Veröffentlichungstag der Anmeldung:
**17.04.85 Patentblatt 85/16**

(84) Benannte Vertragsstaaten:
**DE FR GB IT**

(71) Anmelder: **Willy Scheuerle Fahrzeugfabrik GmbH & Co.**
**Öhringer Strasse 16**
**D-7114 Pfedelbach(DE)**

(72) Erfinder: **Prechtel, Georg**
**Lohklingenstrasse 11**
**D-7114 Pfedelbach(DE)**

(74) Vertreter: **Dipl.-Phys.Dr. Manitz Dipl.-Ing. Finsterwald**
**Dipl.-Ing. Grämkow Dipl.-Chem.Dr. Heyn Dipl.-Phys.**
**Rotermund Morgan, B.Sc.(Phys)**
**Seelbergstrasse 23/25**
**D-7000 Stuttgart 50(DE)**

(54) **Vorrichtung zum regelbaren Antrieb grosser Massen.**

(57) Zwischen einer Ausgangswelle (40), die beispielsweise ein Antriebsrad (5) eines Fahrzeuges antreibt, und einer von einer Antriebsmaschine (z.B. Dieselmotor 6) angetriebenen Eingangswelle (30) ist ein ausgangsseitig die Ausgangswelle (40) angeordnetes, zumindest einstufiges Planetengetriebe angeordnet, welches eingangsseitig zwei Antriebswellen (14, 16) besitzt. Im dargestellten Beispiel ist die Ausgangswelle (40) mit dem Planetenträger (3) des Planetengetriebes verbunden, während die eine Antriebswelle (16) mit dem Sonnenrad (1) und die andere Antriebswelle (14) mit dem Hohlradträger (4) des Planetengetriebes gekoppelt sind. Zum Antrieb der Antriebswellen (14, 16) dienen separate hydrostatische Motoren (12,13), die jeweils von einer eigenen Pumpe (8,9) gespeist werden. Die Pumpen werden von der Eingangswelle (30) über ein zwischengeschaltetes Verteilergetriebe (7) angetrieben. Dabei ist die eine Pumpe (8) variabel, derart, daß der zugeordnete Motor (12) wahlweise in unterschiedlichen Laufrichtungen sowie mit unterschiedlichen Geschwindigkeiten angetrieben bzw. auch zum Stillstand gebracht werden kann. Dementsprechend läßt sich das Gesamtübersetzungsverhältnis zwischen Eingangswelle (30) und Ausgangswelle (40) in einem außerordentlich großen Bereich stufenlos verändern.

./...

EP 0 137 406 A1

FIG. 1

## Vorrichtung zum regelbaren Antrieb großer Massen

Die Erfindung betrifft in allgemeiner Form eine Vorrichtung zum regelbaren Antrieb großer Massen, d.h. zum Antrieb solcher Anlagen und - insbesondere - Fahrzeuge, bei denen es wichtig ist, eine insbesondere hydrostatische Kraftübertragung in einem großen Geschwindigkeitsbereich vorzunehmen und dabei zu gewährleisten, daß vor allem beim Anlauf und im unteren Geschwindigkeitsbereich sehr große Antriebsmomente übertragen werden können, ohne dadurch den insgesamt zur Verfügung stehenden Geschwindigkeitsbereich unerwünscht einzuschränken.

Insbesondere soll sich die vorliegende Erfindung für sogenannte Schwerlast- und Schwerstlastfahrzeuge mit einer Vielzahl von Achsen eignen.

Bei derartigen Fahrzeugen, die für sehr große Nutzlasten, wie z.B. große und schwere Industrieausrüstungen, vorgesehen sind, wird immer häufiger die Forderung erhoben, daß einerseits in der Anfahrphase und an Steigungen ein hohes Antriebsmoment zur Verfügung steht und andererseits bei Fahrt auf im wesentlichen ebener Strecke eine ausreichend hohe Geschwindigkeit erzielt werden kann, die das Befahren von Autobahnen ermöglicht, wofür in der Regel eine Mindestgeschwindigkeit von 62 km/h erforderlich ist.

Bisher wurde versucht, diese Forderungen dadurch zu erfüllen, daß man möglichst viele Achsen mit der entsprechenden Kraft angetrieben hat, um sowohl das benötigte große Antriebsmoment zu erzielen als auch die geforderten Geschwindigkeiten zu erreichen. Dieser Lösungsweg ist jedoch im Hinblick auf den zu treffenden konstruktiven Aufwand unbefriedigend.

Es ist daher Aufgabe der vorliegenden Erfindung, eine Anordnung zu schaffen, die es ermöglicht, unter Verwendung eines hydrostatischen Antriebes eine in einem vergleichsweise großen Geschwindigkeitsbereich stufenlos regelbare Kraftübertragung zu gewährleisten, die sowohl bei niedrigen Geschwindigkeiten die jeweils erforderlichen hohen Antriebsmomente erbringt und gleichzeitig entsprechend hohe Geschwindigkeiten zuläßt, wobei im Falle des Antriebes von Schwerlastfahrzeugen ein besonders kompakter und platzsparender Aufbau des Antriebes und eine Reduzierung der Anzahl angetriebener Achsen ermöglicht werden soll.

Gelöst wird diese Aufgabe durch die in den Patentansprüchen angegebenen Maßnahmen, wobei sich durch die Kombination von Merkmalen der Ansprüche besonders vorteilhafte Ausgestaltungen erzielen lassen.

Die Erfindung beruht auf der Erkenntnis, daß das Gesamtübersetzungsverhältnis zwischen einer von einer Antriebsmaschine, wie Dieselmotor od.dgl., getriebenen Eingangswelle und einer die anzutreibende Anlage bzw. das anzutreibende Fahrzeug oder ein Fahrzeugrad treibenden Ausgangswelle in einem besonders großen Maße stufenlos veränderbar ist, wenn zwischen der Ausgangswelle und der Eingangswelle ein Umlaufgetriebe mit zwei Antriebswellen angeordnet ist, die sich von der Eingangswelle mittels zwischengeschalteter hydraulischer Kraftübertragungen derart antreiben lassen, daß (innerhalb eines konstruktiv vorgegebenen Bereiches) ein beliebiges Verhältnis der Drehzahlen der Antriebswellen - insbesondere mit der Möglichkeit des Stillsetzens einer Antriebswelle und insbesondere mit der zusätzlichen Möglichkeit, die Drehrichtung der Antriebswellen relativ zueinander zu verändern - eingestellt werden kann.

Wenn beispielsweise das Sonnenrad eines Planetengetriebes mit der einen Antriebswelle und der Hohlradkranz dieses Planetengetriebes mit der anderen Antriebswelle und die Ausgangswelle mit dem Planetenträger des Planetengetriebes antriebsmäßig verbunden sind, so wird das Übersetzungsverhältnis zwischen Eingangs- und Ausgangswelle äußerst stark von hoher Übersetzung in Richtung geringer Übersetzung verändert, wenn das Sonnenrad und der Hohlradkranz zunächst bei gegenläufigen Drehrichtungen mit ähnlichen Drehzahlen und danach wiederum mit ähnlichen Drehzahlen, jedoch mit gleicher Drehrichtung angetrieben werden. Zwischen diesen extremen (hohen und niedrigen) Übersetzungsverhältnissen werden dann beliebige Übersetzungen dadurch erreicht, daß z.B. der Hohlradkranz (oder das Sonnenrad) gegenüber dem Sonnenrad (oder dem Hohlradkranz) mit verminderter Drehzahl angetrieben bzw. stillgesetzt wird.

Als hydraulische Kraftübertragung zwischen der Eingangswelle und den Antriebswellen dienen zweckmäßig separate Fluidkreise mit jeweils einem eine der Antriebswellen antreibenden, hydrostatischen Motor und jeweils einer von der Eingangswelle angetriebenen Pumpe, wobei zumindest eine der Pumpen und/oder einer der Hydromotoren variabel ist, d.h. das Verhältnis zwischen Drehzahl und Durchfluß- bzw. Fördermenge (Durchsatz) des hydrostatischen Mediums ist bei variablen Pumpen und Hydromotoren einstellbar veränderlich. Damit wird die Möglichkeit geschaffen, das Verhältnis der Drehzahlen der Hydromotoren in der gewünschten Weise zu verändern und den einen oder anderen Hydromotor stillzusetzen, so daß das Gesamtübersetzungsverhältnis zwischen Eingangs- und Ausgangswelle in der oben beschriebenen Weise verändert werden kann.

Die Erfindung wird nachfolgend anhand der Zeichnung erläutert, in der bevorzugte Ausführungsbeispiele der Erfindung dargestellt sind. Dabei zeigt

Fig. 1   eine schematische Prinzipdarstellung einer ersten Ausführungsform der Erfindung mit einem Planetengetriebe,

Fig. 2   eine schematische Prinzipdarstellung einer zweiten Ausführungsform der Erfindung mit zwei Planetengetrieben und

Fig. 3   eine Umschaltventilanordnung, welche mit einer Konstantpumpe kombiniert ist und die Laufrichtung eines Hydromotors umzuschalten gestattet, der zusammen mit der Pumpe in einem gemeinsamen Fluidkreis angeordnet ist.

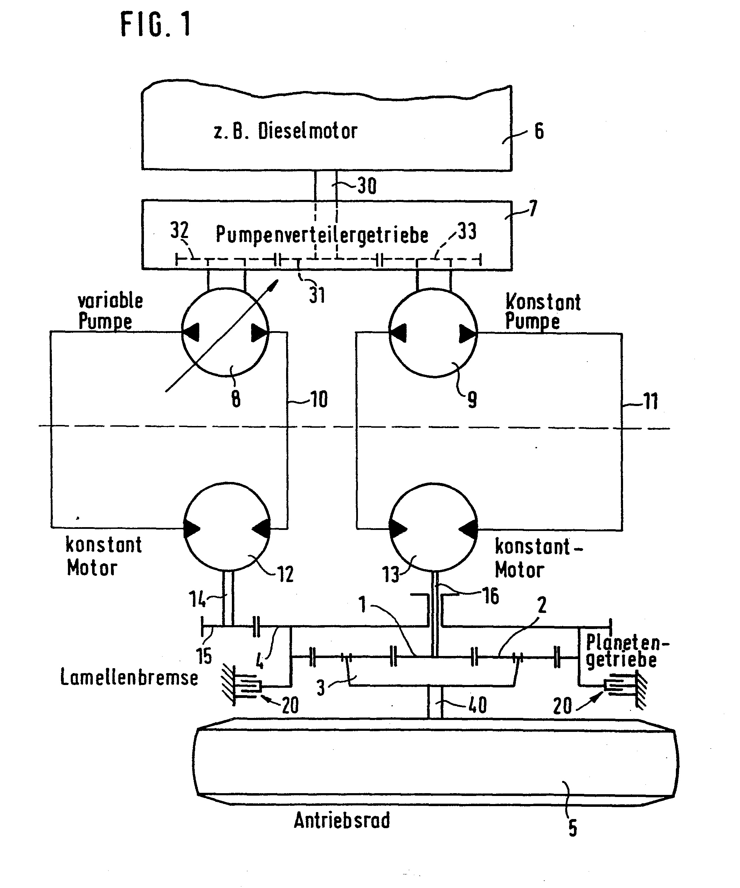

Nach Fig. 1 ist an einem Dieselmotor 6 ein Verteilergetriebe 7 angeschlossen, welches zwei Pumpen 8, 9 antreibt, indem die vom Dieselmotor 6 angetriebene Eingangswelle 30 mittels eines auf ihr angeordneten Zahnrades 31 die damit kämmenden Antriebszahnräder 32 und 33 der Pumpen 8, 9 antreibt, von denen im dargestellten Beispiel die Pumpe 8 variabel und die Pumpe 9 konstant ausgebildet ist.

Die Pumpe 8 liegt in einem Fluidkreis 10 und treibt einen Konstantmotor 12, während die Pumpe 9 in einem Fluidkreis 11 angeordnet ist, in dem sich ein Konstantmotor 13 befindet. Bei diesen Motoren 12, 13 handelt es sich um Hydromotoren, die jedoch nicht notwendigerweise als Konstantmotoren ausgebildet sein müssen, sondern auch regelbar, d.h. variabel sein können. Wichtig ist, daß jedem Fluidkreis 10, 11 eine separate Pumpe 8, 9 zugeordnet ist.

In die einzelnen Fluidkreise können auch mehrere Motore
12, 13 zum Antrieb mehrerer Räder 5 eingeschaltet sein.

Der Hydromotor 13 ist über eine erste Antriebswelle 16
mit dem Sonnenrad 1 eines Umlauf- bzw. Planetengetriebes
verbunden. Der Hohlradkranz 4 des Umlauf- bzw. Planetengetriebes ist ebenfalls drehbar gelagert und kämmt mit
einem Antriebsritzel 15, das mit einer zweiten Antriebswelle 14 mit dem Hydromotor 12 verbunden ist. Der Hohlradkranz 4 kann damit über den Hydromotor 12, dessen Drehrichtung und Drehzahl durch Veränderung der Einstellung
der Pumpe 8 stufenlos veränderbar ist, stufenlos in beiden
Drehrichtungen angetrieben werden. Der Abtrieb zum jeweiligen Antriebsrad 5 erfolgt über die Planetenräder 2,
welche am Planetenträger 3 drehgelagert sind, der seinerseits mit der das Antriebsrad 5 treibenden Ausgangswelle 40
drehfest verbunden ist.

Es sei angenommen, daß beide Hydromotoren 12, 13 die
gleiche Übersetzung haben und beide Pumpen 8, 9 - aufgrund
entsprechender Einstellung der variablen Pumpe 8 - in ihrem
Hubvolumen ebenfalls gleich groß sind. Als Folge davon
drehen beide Hydromotoren 12, 13 gleich schnell.

Wenn nun - durch entsprechende Einstellung der Förderrichtungen der Pumpen 8, 9 - beide Hydromotoren 12, 13 mit
gleicher Drehrichtung angetrieben werden, so drehen sich
das Sonnenrad 1 und der Hohlradkranz 4 in einander entgegengesetzten Richtungen, so daß der Planetenträger 3
stillsteht und kein Abtrieb zum Antriebsrad 5 erfolgt,
wenn der Hohlradkranz 4 im Bereich seiner mit den Planetenrädern 2 zusammenwirkenden Innenverzahnung und das Sonnenrad 1 im Bereich seiner mit den Planetenrädern 2 zusammenwirkenden Außenverzahnung gleiche Umfangsgeschwindigkeiten haben. Mit beginnender Verkleinerung des Hubvolumens der variablen Pumpe 8 ändert sich die Drehzahl des Hydromotors 12 relativ zur Drehzahl des Hydromotors 13, so daß das Sonnenrad 1 und der Hohlradkranz 4 mit unterschiedlichen Umfangsgeschwindigkeiten in entgegengesetzten Richtungen laufen und sich ein Abtrieb zum Antriebsrad 5 einstellt, der durch Veränderung der Einstellung der Pumpe 8 stetig regelbar ist.

Wird die variable Pumpe 8 durch Verstellung ihres Schwenkwinkels in ihrem Hubvolumen bis zum Null-Hub reduziert, so ist dies gleichbedeutend damit, daß der Hydromotor 12 und der Hohlradkranz 4 stillstehen. Die Antriebsleistung des Dieselmotors 6 wird damit über die Pumpe 9 auf den Hydromotor 13 übertragen.

Gegebenenfalls kann der Hohlradkranz 4 zusätzlich - oder alternativ - mit einer Lamellenbremse 20 festgehalten werden, so daß der Hydromotor 12 entlastet ist, d.h. keine Haltekräfte zum Stillhalten des Hohlradkranzes 4 aufbringen muß.

Wird nun der Schwenkwinkel der variablen Pumpe 8 - nachdem die gegebenenfalls vorhandene Lamellenbremse 20 gelöst wurde - stufenlos weiterverstellt, so fördert die Pumpe 8 in entgegengesetzter Richtung; dementsprechend dreht sich die Antriebsdrehrichtung des Hydromotors 12 um, und der Hohlradkranz 4 dreht sich - zunächst mit geringer Drehzahl - in gleicher Richtung wie das Sonnenrad 1. Bei vollem Schwenkwinkel bzw. vollem Hub der variablen Pumpe 8 in der genannten (geänderten) Richtung treiben die Hydromotoren 12 und 13 schließlich das Sonnenrad 1 und den Hohlradkranz 4 mit gleicher Drehzahl und gleicher Drehrichtung an, so daß auch der Planetenträger 3 mit derselben Drehzahl und derselben Drehrichtung läuft.

0137406

Während der dargestellten Verstellung der variablen Pumpe 8 - zunächst sehr hohes Hubvolumen in der einen Förderrichtung, dann kontinuierliche Verminderung des Hubvolumens bis zum Nullhub und danach kontinuierliche Erhöhung des Hubvolumens in entgegengesetzter Förderrichtung - hat sich die Gesamtübersetzung zwischen der vom Dieselmotor 6 angetriebenen Eingangswelle 30 und der das Antriebsrad 5 treibenden Ausgangswelle 40 über einen sehr weiten Bereich stufenlos geändert.

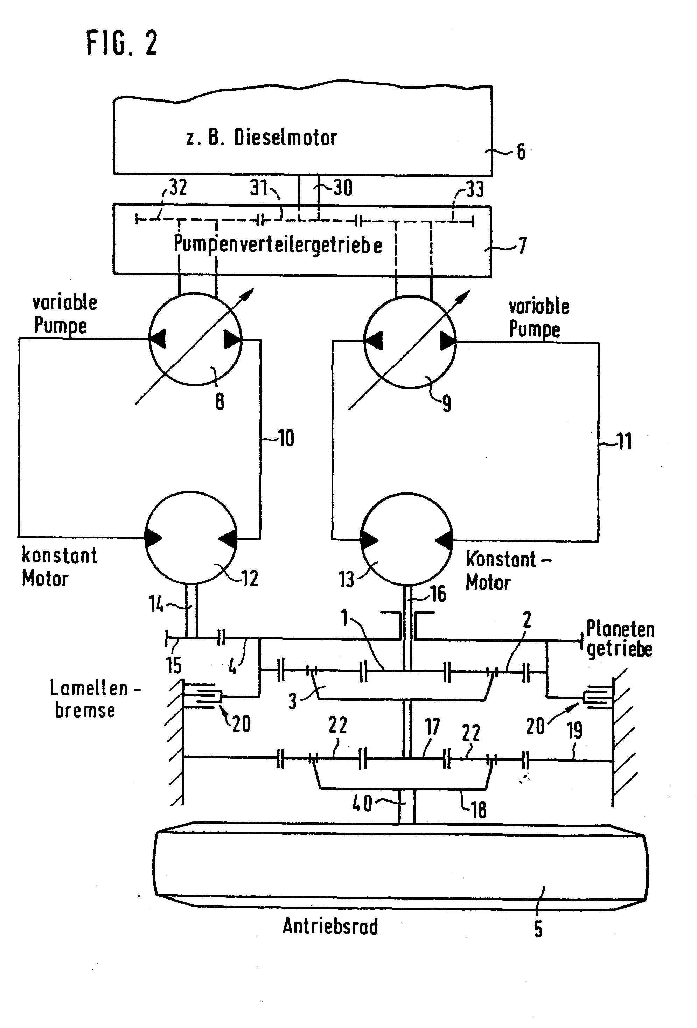

Bei der Ausführungsform nach Fig. 2 sind für gleiche Teile die gleichen Bezugszeichen wie in Fig. 1 verwendet.

Die Variante nach Fig. 2 unterscheidet sich von der Ausführungsform nach Fig. 1 im wesentlichen dadurch, daß zum ersten Planetengetriebe noch ein zweites Planetengetriebe in Reihe geschaltet ist, wobei der Planetenträger 3 des ersten Planetengetriebes direkt mit dem Sonnenrad 17 des zweiten Planetengetriebes verbunden ist. Der Abtrieb vom zweiten Planetengetriebe erfolgt wiederum über die Planetenräder 22 dieses zweiten Planetengetriebes, welche am Planetenträger 18 drehgelagert sind, der seinerseits mit der Ausgangswelle 40 zum Antrieb des Rades 5 drehfest verbunden ist. Der Hohlradkranz 19 ist bei diesem zweiten Planetengetriebe drehfest angeordnet.

Darüber hinaus sind die Pumpen 8 und 9 in Fig. 2 beide variabel ausgebildet, d.h. sowohl die Förderrichtung als auch das Fördervolumen können verändert werden.

Die in den Figuren 1 und 2 dargestellten Planetengetriebe werden bevorzugt in an sich bekannter Weise in der Radnabe oder im Bereich der Radnabe des Antriebsrades 5 untergebracht. In Fig. 1 ist durch eine strichlierte Trennlinie kenntlich gemacht, daß der Dieselmotor, das Verteilergetriebe 7 sowie die Pumpen 8, 9 zentral zu einem Antriebsblock zusammengefaßt werden können und die Motoren 12, 13
mit zugeordneten Getrieben unmittelbar in Radnähe untergebracht sind.

Abweichend von der in Fig. 2 dargestellten Ausführungsform kann gegebenenfalls das zweite Planetengetriebe auch
durch ein normales Zahnradgetriebe ersetzt werden, bei dem
beispielsweise das in diesem Falle relativ kleine Zahnrad
17 unmittelbar mit einem größeren Zahnrad kämmt, welches
auf der Ausgangswelle 40, d.h. auf der Achse des Rades 5
angeordnet ist. Der Vorteil dieser letzteren Anordnung
liegt in der größeren Einfachheit, während der Vorteil
des zweiten Planetengetriebes vor allem darin zu sehen
ist, daß auch bei geringem Raumbedarf eine hohe Übersetzung
erreichbar ist.

Darüber hinaus ist es grundsätzlich auch möglich, den Hohlradkranz 19 des zweiten Planetengetriebes drehbar anzuordnen und mittels eines (nicht dargestellten) dritten Hydromotors anzutreiben, welcher zusammen mit einer dritten
(nicht dargestellten) Pumpe in einem weiteren separaten
Fluidkreis angeordnet ist.

Bei der obigen Beschreibung wurde davon ausgegangen, daß
die Hydromotoren 12 und 13 in den Figuren 1 und 2 und
damit auch der Hohlradkranz 4 sowie das Sonnenrad 1 in
einander entgegengesetzten oder gleichgerichteten Richtungen laufen können. Dadurch wird eine extreme Veränderbarkeit des Gesamtübersetzungsverhältnisses zwischen Eingangswelle 30 und Ausgangswelle 40 erreicht. Falls eine derart
extreme Veränderbarkeit nicht notwendig ist, genügt es,
wenn das Sonnenrad 1 und der Hohlradkranz 4 immer mit
gleicher Drehrichtung angetrieben werden; auch dann lassen
sich noch große Änderungen des Gesamtübersetzungsverhältnisses erzielen, wenn das Verhältnis der Drehzahlen von Sonnenrad 1 und Hohlradkranz 4 hinreichend weit veränderbar ist, d.h. wenn insbesondere die Drehzahl des Hohlradkranzes 4 (oder des Sonnenrades 1) zwischen Stillstand und einer dem Sonnenrad 1 (oder dem Hohlradkranz 4) entsprechenden Drehzahl beliebig veränderbar ist.

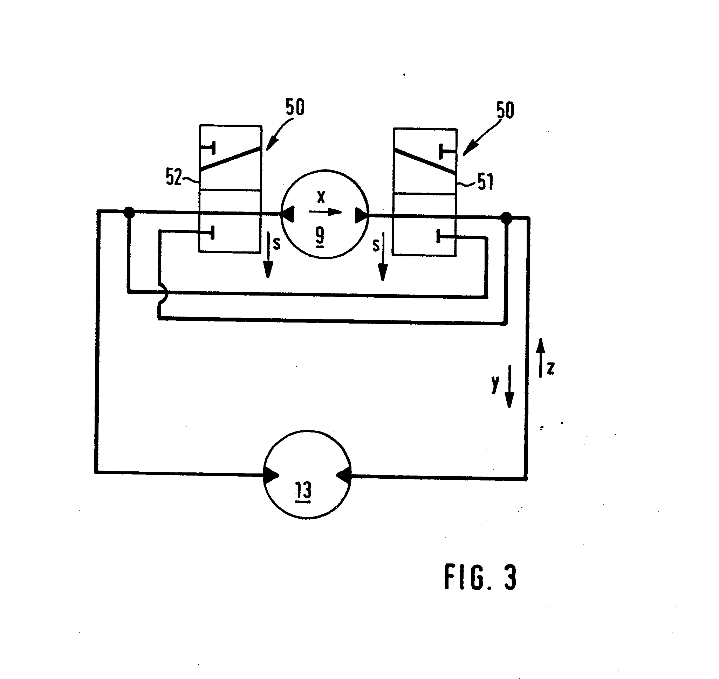

In Fig. 3 ist nochmals ein Fluidkreis mit Pumpe 9 und Hydromotor 13 sowie einer Umschaltventilanordnung 50 dargestellt. Die Ventilanordnung 50 besteht im wesentlichen aus zwei Ventilen, welche schematisch durch Schieber 51 und 52 wiedergegeben werden, welche sich aus der dargestellten Lage simultan in Pfeilrichtung s verschieben lassen. Damit wird die Möglichkeit geschaffen, bei gleichbleibender Förderrichtung x der Pumpe 9 die Strömung des hydraulischen Mediums des Fluidkreises in Richtung y bei der dargestellten Lage der Schieber 51 und 52 in die Richtung z umzuschalten, welche der in Richtung s verschobenen Lage der Schieber 51 und 52 zugeordnet ist.

Patentansprüche

1. Vorrichtung zum regelbaren Antrieb großer Massen, insbesondere zum Antrieb der Räder von Fahrzeugen mit sehr großer Nutzlastrate, zum Antrieb von Werkzeugmaschinen, Fördereinrichtungen od.dgl., gekennzeichnet durch ein zumindest einstufiges, einer Kraftquelle (6) zugeordnetes Planeten- bzw. Umlaufgetriebe (1 bis 4) mit wenigstens zwei Antriebswellen (14,16), die jeweils mit einem hydrostatischen Antriebsmotor (12,13) verbunden sind, sowie mit einer Einrichtung (8,9,12,13) zur - insbesondere stufenlosen - Regelung der Drehzahl zumindest eines der hydrostatischen Antriebsmotoren (12,13), wobei vorzugsweise eine der beiden Antriebswellen (14,16) direkt mit dem Sonnenrad (1) des Planeten- bzw. Umlaufgetriebes und die andere der Antriebswellen (14,16) mit dem drehbar gelagerten Hohlradkranz (4) des Planeten- bzw. Umlaufgetriebes gekuppelt sind und der Planetenradträger (3) des Planeten- bzw. Umlaufgetriebes mit einer Abtriebswelle (40) antriebsmäßig gekoppelt ist.

2. Vorrichtung nach Anspruch 1, dadurch gekennzeichnet, daß die Abtriebswelle des Planeten- bzw. Umlaufgetriebes (1 bis 4) die Eingangswelle für ein nachgeschaltetes Getriebe bildet, wobei das nachgeschaltete Getriebe vorzugsweise ein weiteres Planeten- bzw. Umlaufgetriebe (17 bis 19, 22) ist, dessen Eingangswelle mit dem Sonnenrad (17) verbunden ist und dessen Hohlradkranz (19) entweder drehfest oder drehbar gelagert und - insbesondere über eine weitere Antriebswelle - in beiden Drehrichtungen antreibbar ist.

3. Vorrichtung nach einem der Ansprüche 1 oder 2, dadurch gekennzeichnet, daß die Antriebs- und Abtriebswellen der in Reihe geschalteten Umlauf- bzw. Planetengetriebe koaxial verlaufen und
- bei Anordnung der Vorrichtung an einem Fahrzeug - vorzugsweise zumindest ein Umlauf- bzw. Planetengetriebe in der Radnabe eines Antriebsrades (5) angeordnet ist.

4. Vorrichtung nach einem der Ansprüche 1 bis 3, dadurch gekennzeichnet, daß die Übersetzung jeder Getriebestufe im Bereich von 1:6 bis 1:8 liegt.

5. Vorrichtung nach einem der Ansprüche 1 bis 4, dadurch gekennzeichnet, daß die den einzelnen Antriebswellen (14,16) zugeordneten Hydromotoren (12,13) in voneinander getrennten, jeweils zumindest eine Pumpe (8,9) aufweisenden Fluidkreisen (10,11) angeordnet sind, wobei die Drehzahl zumindest eines der Hydromotoren (12,13) veränderbar ist, indem einer der Hydromotoren (12,13) und/oder eine der Pumpen (8,9) variabel ist.

6. Vorrichtung nach Anspruch 5, dadurch gekennzeichnet, daß die in den Fluidkreisen (10,11) angeordneten Pumpen (8,9) jeweils gleiches Hubvolumen besitzen.

7. Vorrichtung nach einem der Ansprüche 1 bis 6, dadurch gekennzeichnet, daß jede variable Pumpe (8,9) über ihren vollen Schwenkwinkel verstellbar ist und damit die von diesen Pumpen gespeisten Motore (12,13) in beiden Richtungen antreibbar und bei Null-Hub der jeweiligen Pumpe (8,9) stillsetzbar sind, wobei der Stillstand vorzugsweise zusätzlich durch eine Bremse (20) sicherbar ist.

8. Vorrichtung nach einem der Ansprüche 1 bis 7, dadurch gekennzeichnet, daß Konstantpumpen (8,9) zur Drehrichtungsumschaltung der jeweils gespeisten Hydromotore (12,13) mit Umschaltventilen (50 bis 52) kombiniert sind.

9. Vorrichtung nach einem der Ansprüche 1 bis 8, dadurch gekennzeichnet, daß den Pumpen (8,9) ein gemeinsames Verteilergetriebe (7) zugeordnet ist, an das die Pumpen (8,9) vorzugsweise angeflanscht sind.

10. Vorrichtung nach Anspruch 9, dadurch gekennzeichnet, daß entweder das Verteilergetriebe (7) mit variabler Drehzahl - insbesondere mittels eines Verbrennungsmotors (9) - angetrieben und die Steuerung bzw. Regelung der variablen Pumpen drehzahlabhängig vorgenommen ist oder das Verteilergetriebe (7) mit konstanter Drehzahl angetrieben ist und für zumindest eine variable Pumpe (8,9) Verstellorgane vorgesehen sind.

11. Vorrichtung nach einem der Ansprüche 1 bis 10, dadurch gekennzeichnet, daß eine als Kraftquelle angeordnete Antriebsmaschine - z.B. ein Dieselmotor (6) - zumindest zwei hydrostatische Pumpen (8,9) simultan - z.B. über ein zwischengeschaltetes Verteilergetriebe (7) - antreibt, daß zwischen Druck- und Saugseite jeder Pumpe (8,9) zumindest ein von der jeweiligen Pumpe (8,9) gespeister hydrostatischer Motor (12,13) geschaltet ist, welcher jeweils eine der Antriebswellen (14,16) des Umlauf- bzw. Planetengetriebes (1 bis 4) antreibt, und daß zumindest eine der Pumpen (8,9) und/oder einer der Hydromotoren (12,13) variabel sind, indem das Verhältnis zwischen Drehzahl und Durchsatz des hydraulischen Mediums einstellbar veränderlich ist.

12. Vorrichtung nach einem der Ansprüche 1 bis 11, dadurch gekennzeichnet, daß beide hydrostatische Motoren (12,13) Konstantmotoren sind, von denen der eine zusammen mit der einen als Konstantpumpe ausgebildeten Pumpe (9) und der andere zusammen mit der anderen Pumpe (8), welche variabel ist, jeweils in einem separaten Fluidkreis (10,11) angeordnet sind.

13. Vorrichtung nach einem der Ansprüche 1 bis 12, dadurch gekennzeichnet, daß eine der Antriebswellen (14,16) bzw. ein damit antriebsmäßig gekoppeltes Teil, insbesondere der Hohlradkranz (4) eines Planetengetriebes (1 bis 4), mittels einer Lamellenbremse (20) stillsetzbar ist.

FIG. 1

z. B. Dieselmotor — 6

— 30

32  Pumpenverteilergetriebe  33 — 7

31

variable Pumpe

Konstant Pumpe

8  — 10

9  — 11

konstant Motor

12

13

konstant-Motor

14  16

15  1  2

Lamellenbremse

4  Planeten-getriebe

3

20  40  20

Antriebsrad  5

FIG. 2

z. B. Dieselmotor — 6

32   31   30   33

Pumpenverteilergetriebe — 7

variable Pumpe    variable Pumpe

8    9

10    11

konstant Motor    Konstant-Motor

12    13    16

14    1    2    Planetengetriebe

15    4    3

Lamellen-bremse

20    22    17    22    20    19

40    18

Antriebsrad    5

0137406

FIG. 3

Europäisches
Patentamt

EUROPÄISCHER RECHERCHENBERICHT

0137406

Nummer der Anmeldung

EP 84 11 1461

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-1 918 954 (ZAHNRADFABRIK FRIEDRICHSHAFEN) <br> * Seite 4, Zeilen 15-25; Anspruch 1; Figur 1 * | 1,5,7, 9-12 | F 16 H 47/04 <br> B 60 K 17/10 |
| X | DE-C-1 132 450 (MUELLER) <br><br> * Spalte 3, Zeilen 18-43; Figuren 2,3 * | 1,3,5, 9-11 | |
| X | DE-A-2 101 515 (FUCHS) <br> * Ansprüche 1,6; Figur * | 1,3 | |
| X | DE-C-1 140 469 (MUELLER) <br><br> * Spalte 1, Zeile 44 - Spalte 2, Zeile 24; Anpsprüche 1,2; Figuren * | 1,3,5, 9 | |
| | | | RECHERCHIERTE SACHGEBIETE (Int. Cl.4) |
| A | DE-C-1 065 734 (EBERT) <br><br> * Spalte 3, Zeilen 1-41; Figuren 4,5 * | 1,2,5, 7 | B 60 K 17/00 <br> F 16 H 47/00 |
| A | DE-A-2 202 615 (C.M.I.) | 1,2,5, 7 | |
| A | GB-A-1 573 836 (RENOLD) | | |

Der vorliegende Recherchenbericht wurde für alle Patentansprüche erstellt.

| Recherchenort | Abschlußdatum der Recherche | Prüfer |
|---|---|---|
| BERLIN | 07-12-1984 | KRIEGER P O |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

&: Mitglied der gleichen Patentfamilie, überein- stimmendes Dokument

EPA Form 1503. 03.82